# EUROPEAN PATENT APPLICATION

(11) **EP 4 331 924 A1**
(43) Date of publication of application: **06.03.2024**
(21) Application number: 22832153.5
(22) Date of filing: 30.06.2022
(51) Int. Cl.: B60R 22/12, B60R 21/02, B60N 2/90

(54) **AUTOMOBILE SEAT AND LOWER LIMB RESTRAINING DEVICE FOR AUTOMOBILE SEAT**

(30) Priority: 02.07.2021 CN 202110749983
(71) Applicant: Yanfeng International Automotive Technology Co., Ltd., Shanghai 201306 (CN)
(72) Inventor: LIU, Chongqing, Shanghai 201306 (CN)
(74) Representative: Colombo, Stefano Paolo
(86) International application number: PCT/CN2022/102618
(87) International publication number: WO 2023/274341

(57) **Abstract**

The present invention discloses an automobile seat and a lower limb restraint device for an automobile seat, wherein the lower limb restraint device comprises a protective body and two adjusting bodies, wherein the side facing the occupant of the protective body rests against the lower limb of the occupant and wherein the two ends of the protective body are correspondingly connected to the automobile seat by the adjusting bodies on the two sides of the automobile seat respectively, so that the protective body restrains the movement of the occupant and can remain relatively stationary with respect to the lower limbs of the occupant, wherein the adjusting bodies are provided on both sides of the automobile seat respectively, wherein one end of the adjusting body is connected to the protective body, and the other end of the adjusting body is fixedly connected to the automobile seat, wherein the adjusting body is used to adjust the magnitude of the restraining force exerted on the occupant by the protective body. When a frontal collision occurs in a vehicle, the lower limb restraint device can restrain the knee and upper shank of the occupant, alleviate the diving phenomenon, and at the same time, the two adjusting bodies can coordinate with each other, so as to avoid the relative sliding of the protective body with respect to the lower limbs of the occupant when restraining the lower limbs of the occupant.

## Description

### Technical Field

The present invention relates to an automobile seat and a lower limb restraint device for automobile seat.

### Background of Invention

At present, in the technical field, a seat backrest of an automobile seat is adjusted according to the sitting habits of an occupant in a normal use. In existing safety regulation tests, the seat backrest can be adjusted to a design position (generally about 25 degrees with respect to the vertical position), wherein the test is conducted using a crash dummy, wherein the damage of the crash dummy is evaluated. In the real world, in an actual collision process, the seat backrest may not be adjusted to the design position, for example, be adjusted to 45 degrees relative to the vertical position, wherein the occupant can adjust the seat backrest to even 60 degrees relative to the vertical position, in order to take a rest. If a frontal collision occurs at this time, as the occupant is lying or semi-lying on the seat, the entire torso is more likely to slide forward along the seat back and seat basin due to inertial forces. Since the mass of the lower limbs accounts for about 34% of the total mass of the human body, in the event of a frontal collision, for example, in a 50KPH rigid wall frontal collision. Without effective foot support or knee support of the vehicle's interior trim, the inertial force on the lower limbs will be enormous, generating a traction force of 6-9kN, which pulls the pelvis and torso of the occupant, which will easily lead to the phenomenon of dive and ultimately lead to an increased risk of injury.

At the same time, with the development of automobile intelligence, automatic driving, or unmanned driving technology, by partially or completely freeing the driver's attention from the driving process, the driver, and especially the passenger side occupant, will have more possibilities for sitting postures in the vehicle. Generally, sitting postures can be classified into three types: 1) a normal sitting posture, 2) a working sitting posture, and 3) a leisure sitting posture. Specifically, in the normal sitting posture, the occupant can fully focus on the vehicle's driving conditions. The design position of the seat backrest is generally about 25 degrees. In the working sitting posture, the occupant may not pay attention to the driving condition of the vehicle, and can work or entertain in the vehicle, wherein the seat backrest can be adjusted to about 45 degrees relative to the vertical position. In the leisure sitting posture, the occupant can completely not pay attention to the driving of the vehicle, can close the eyes and rest, wherein the seat backrest can be adjusted to 60 degrees, or even greater angle relative to the vertical position.

Therefore, when an unavoidable collision occurs, the existing technology or traditional automobile safety restraint system can hardly protect the occupants in the Working sitting posture or leisure sitting posture and may even make the occupants suffer more serious injuries. This is because the existing crash safety technology solutions are designed to evaluate crash safety injuries only when the occupant is in the normal driving position or according on the design position of the seat. In the working or leisure sitting posture (semi-reclining or fully reclining sitting posture), in the event of a frontal collision, the occupant's torso slides downward along the seat backrest due to inertia, wherein the dive phenomenon is more likely to occur under the pull of the lower limb's inertia force. Unlike conventional seat belts and restraint systems that restrain the direction, studies have shown that if a collision occurs in a Working sitting posture or a leisure sitting posture, serious injuries to the iliac bones, the abdomen and organs, and the tailbone, etc. may occur.

### Summary of Invention

The technical problem to be solved by the present invention is to provide an automobile seat and a lower limb restraint device for automobile seat in order to overcome the defects of an automobile seat in the prior art that lacks protection for the lower limbs of an occupant during a collision.

The present invention solves the above technical problem by the following technical solution:
A lower limb restraint device for an automobile seat, characterized in that the lower limb restraint device comprises a protective body and two adjusting bodies, wherein the protective body is configured to rest against the lower limb of the occupant on the side facing the occupant and wherein the two ends of the protective body are correspondingly connected to the automobile seat by the adjusting bodies on the two sides of the automobile seat respectively, so that the protective body restrains the movement of the occupant and can remain relatively stationary with respect to the lower limbs of the occupant, wherein the adjusting bodies are provided on both sides of the automobile seat respectively, wherein the adjusting body is configured to be connected to the protective body with one end of the adjusting body and to be fixedly connected to the automobile seat with the other end of the adjusting body, wherein the adjusting body is used to adjust the magnitude of the restraining force exerted on the occupant by the protective body

In the present solution, in the case of adopting the aforesaid structural form, when a frontal collision occurs in a vehicle, the lower limb restraint device can restrain the knee and upper shank of the occupant, alleviate the diving phenomenon and absorb the kinetic energy of the occupant while utilizing the support of the thighs, improve the restraining position of the seat belt on the occupant, thereby reducing the injury of the occupant. As a result, the problem of the lack of protection for the lower limbs of the occupants of the automobile seat in the process of collision is effectively solved, which is conducive to reducing the collision injuries to the main organs of the human body, such as the head, neck, thorax, spine, and internal organs, and improves the driving or riding comfort and safety. At the same time, the two adjusting bodies can coordinate with each other in the collision process to adjust the dynamics of the protective body, thereby avoiding the relative sliding of the protective body with respect to the lower limbs of the occupant when restraining the lower limbs of the occupant, which is conducive to reducing the abrasions on the patella or knee of the occupant by the protective body when sliding laterally.

Preferably, the protective body may comprise a first connecting portion, a protective portion and a second connecting portion connected in sequence, wherein the first connecting portion and the second connecting portion can be connected to the two adjusting bodies respectively, wherein the protective portion is configured to rest against the lower limb of the occupant.

In the present solution, in the case of adopting the aforesaid structural form, when a collision occurs in a vehicle, the first connecting portion and the second connecting portion on both sides of the protective portion can independently adjust the protective portion, and at the same time the protective portion does not come into contact with the vehicle seat, i.e., it is not restricted by the automobile seat, which is conducive to making the posture adjustment of the protective portion more flexible, and is conducive to avoiding the relative sliding of the protective portion with respect with the lower limbs of the occupant when restraining the lower limbs of the occupant, and is conducive to reducing the abrasions on the patella or knee of the occupant by the protective body when sliding laterally.

Preferably, the adjusting body may comprise a telescopic mechanism capable of changing the amount of elongation, wherein the telescopic mechanism is configured to be fixedly connected to the automobile seat with one end of the telescopic mechanism and to be connected to the protective body with an extended end of the telescopic mechanism.

In the present solution, in the case of adopting the aforesaid structural form, in a normal state, the telescopic mechanism can enable the lower limb restraint device to meet the use of occupants of different magnitudes by changing the amount of telescoping of the telescopic end. In a vehicle collision state, the telescopic end of the telescopic mechanism stops extending to restrain the lower limb of the occupant. By restraining the lower limbs/knees, the thighs can be subjected to more restraint, which can reduce injuries to other important parts of the body, such as the abdomen and the spine, improve the driving or riding safety, and reduce the occurrence of diving phenomenon of the occupant, thus reducing injuries to the occupant.

Preferably, the telescopic mechanism may comprise a retracting and releasing portion and an adjusting belt, wherein the retracting and releasing portion is configured to be fixedly mounted to the automobile seat, wherein the adjusting belt is configured to be wrapped within the retracting and releasing portion with one end of the adjusting belt, and to extend out of the retracting and releasing portion and to be connected to the protective body with the other end of the adjusting belt, wherein the magnitude of the restraining force exerted on the occupant by the protective body can be adjusted by changing the elongation amount of the adjusting belt.

In the present solution, in the case of adopting the aforesaid structural form, the amount of restraint force exerted on the occupant by the protective body due to the telescopic mechanism can be varied by changing the elongation amount of a protruding end of the adjusting belt. Such a form of mechanism is simple and efficient, and enables the adjusting body to have a constraining adjustment function that meets the needs of actual use.

Preferably, the adjusting body may further comprise a locking mechanism, wherein the locking mechanism is provided within the retracting and releasing portion and can act on the adjusting belt to stop the elongation of the adjusting belt.

Preferably, the adjusting body may further comprises a force-limiting mechanism, wherein the force-limiting mechanism is provided within the retracting and releasing portion and can act on the adjusting belt, wherein the force-limiting mechanism is configured to deform or move when the value of the acting force applied to the adjusting belt is greater than a set value of the force-limiting mechanism, so as to keep the magnitude of the restraining force exerted by the protective body on the occupant at the set restraining force value.

Preferably, the adjusting body may further comprise a pre-tensioning mechanism, wherein the pre-tensioning mechanism is provided within the retracting and releasing portion and can act on the adjusting belt, so as to provide pre-tensioning force between the protective body and the lower limb of the occupant.

In the present solution, in the case of adopting the aforesaid structural form, the design of the pre-tensioning mechanism, the locking mechanism and the force-limiting structure not only enables the protective body to form constraints on the lower limbs of the occupant during the collision of the vehicle, but also enables the magnitude of the restraining force exerted on the occupant to be adjusted promptly, thereby preventing the magnitude of the restraining force exerted from exceeding the tolerance value of the human body, so as to form a protection for the lower limbs of the occupant.

Preferably, the adjusting body may further comprise a first connecting body, wherein the protective body has a second connecting body at an end of the protective body, wherein the first connecting body is configured to be fixedly connected to the adjusting belt with one end of the first connecting body and to be connected to the second connecting body with the other end of the first connecting body.

In the present solution, in the case of adopting the aforesaid structural form, the adjusting body and the protective body are connected in the form of a first connecting body and a second connecting body, which can bring convenience to the occupant when wearing the lower limb restraint device, and is conducive to realizing the quick connection between the adjusting body and the protective body.

Preferably, the first connecting body can be configured as a locking body and be sewn to a protruding end of a corresponding adjusting belt, wherein the second connecting body can be configured as a locking tab and be sewn to a respective one of the two ends of the protective body.

Preferably, the telescopic mechanism can be configured as an elastic member, wherein a fixed end and a grooved end are provided at two ends of the elastic member respectively, wherein the fixed end is configured to be fixedly connected to the automobile seat, wherein the groove end is configured to be snap-connected to the protective body.

Preferably, the protective body can be configured to cover the knee and upper shank of the occupant on a side facing the occupant, so as to restrain the lower limbs of the occupant.

In the present solution, in the case of adopting the aforesaid structural form, the lower limb restraint device in this position can allow for more restraint of the thighs by restraining the lower limbs/knees of the occupant, which can reduce injuries to other important parts of the body, such as the abdomen, spine, etc., thereby improving the safety of the driving and riding.

Preferably, the protective body can be provided with a liner on the side facing the occupant, wherein the liner is of a flexible material, wherein the liner is configured to be fixedly connected to the protective body with one side of the liner and to rest against the lower limb of the occupant with the other side of the liner.

In the present solution, in the case of adopting the aforesaid structural form, the protective body can be formed with a three-dimensional shape of the knee and upper shank imitating the shape of the knee and upper shank by means of an internal foam or foam material thereof as a liner in the knee contact area, so as to improve the comfort of the occupant when using the seat and to better constrain the knee and the shank and to reduce the amount of knee slippage.

An automobile seat characterized in that the automobile seat adopts the lower limb restraint device for automobile seat as described above.

In the present solution, in the case of adopting the aforesaid structural form, the automobile seat is provided with a lower limb restraint device, so that when a frontal collision occurs in a vehicle, the lower limb restraint device can restrain the knee and upper shank of the occupant, alleviate the diving phenomenon and absorb the kinetic energy of the occupant while utilizing the support of the thighs, improve the restraining position of a seat belt on the occupant, thereby reducing the injury to the occupant. As a result, the problem of the lack of protection of the lower limbs of the occupant by the automobile seat in the collision process is effectively solved, which is conducive to reducing the collision injuries to the main organs of the human body, such as the head, neck, chest, spine, and internal organs, and improves the driving or riding comfort and safety. At the same time, the lower limb restraint device can also be applied in future autonomous driving or unmanned driving scenarios, wherein protection is formed for the occupant during a collision.

Preferably, the inclination of the seat backrest of the automobile seat can be adjusted in corresponding to the following occupant sitting postures:
- Normal sitting posture;
- Working sitting posture;
- Leisure sitting posture

Preferably, in the normal sitting position, the seat backrest has a first angle of no more than 25° with respect to the upright position; in the working position, the seat backrest has a second angle of between 40° and 50° with respect to the upright position; and in the leisure sitting posture, the seat backrest has a third angle of more than 50° with respect to the upright position.

Preferably, the lower limb restraining device can be configured to restrain the knee and upper shank of the occupant in the event of a frontal collision of the vehicle in the working sitting posture or in the leisure sitting posture, to alleviate the diving phenomenon and to absorb the kinetic energy of the occupant while utilizing the support of the thighs.

The above-mentioned preferrable measurements can be arbitrarily combined to form preferrable embodiments of the present invention on the basis of consideration of the general common knowledge in the art.

In some embodiments, the present invention may have the following positive effects:
When a frontal collision occurs in a vehicle, the lower limb restraint device would restrain the knee and upper shank of the occupant, alleviate the diving phenomenon and absorb the kinetic energy of the occupant while utilizing the support of the thighs, improve the restraining position of the seat belt on the occupant, thereby reducing the injury of the occupant. As a result, the problem of the lack of protection for the lower limbs of the occupants of the automobile seat in the process of collision is effectively solved, which is conducive to reducing the collision injuries to the main organs of the human body, such as the head, neck, thorax, spine, and internal organs, and improves the driving or riding comfort and safety. At the same time, the two adjusting bodies can coordinate with each other in the collision process to adjust the dynamics of the protective body, thereby avoiding the relative sliding of the protective body with respect to the lower limbs of the occupant when restraining the lower limbs of the occupant, which is conducive to reducing the abrasions on the patella or knee of the occupant by the protective body when sliding laterally.

### Brief Description of Drawings

Fig. 1 is a schematic diagram of the structure of an automobile seat of an embodiment of the present invention.
Fig. 2 is a schematic diagram of the structure of a lower limb restraint device of an embodiment of the present invention.

### Detailed Description of Drawings

The present invention is hereinafter described more clearly and completely by means of embodiments and in conjunction with the accompanying drawings, without thereby limiting the invention to the scope of the embodiments.

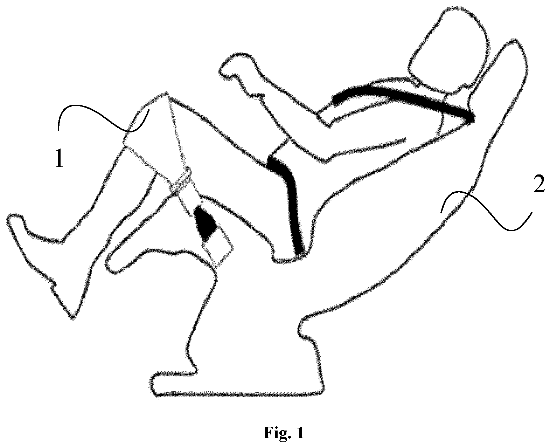

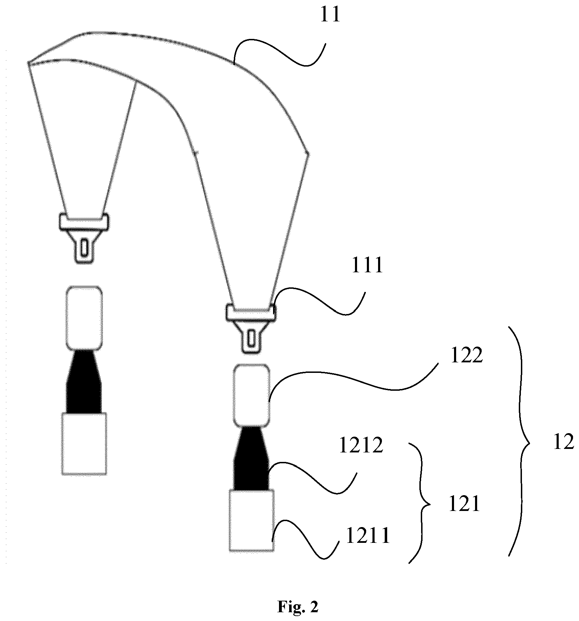

An embodiment of the present invention provides a lower limb restraint device 1 for an automobile seat 2. As shown in Figs. 1 and 2, the lower limb restraint device 1 comprises a protective body 11 and two adjusting bodies 12, wherein the protective body 11 is configured to rest against the lower limbs of the occupant on the side facing the occupant, and wherein the two ends of the protective body 11 are correspondingly connected to the automobile seat 2 by the adjusting bodies 12 on the two sides of the automobile seat 2 respectively so that the protective body 11 restrains the movement of the occupant and can remain relatively stationary with respect to the lower limbs of the occupant, wherein the adjusting bodies 12 are provided on both sides of the automobile seat 2 respectively, wherein the adjusting body 12 is configured to be connected to the protective body 11 with one end of the adjusting body 12 and to be fixedly connected to the automobile seat 2 with the other end of the adjusting body 12, wherein the adjusting body 12 is used to adjust the magnitude of the restraining force exerted on the occupant by the protective body 11. In Fig. 1 it is shown that the lower limb restraint device 1 can restrain the occupant's knee and upper shank when the occupant is in a leisure sitting posture. In an embodiment not shown, the lower limb restraint device 1 can also be configured to restrain the occupant's knee and upper shank when the occupant is in a working sitting posture.

In the case of adopting the above-described structural form, the protective body 11 adopts an imitation structure of the human knee and the upper shank, wherein the protective body 11 straddles the lower limb of the occupant, wherein the protective body 11 rests against the knee and the upper shank of the occupant on the side facing the occupant, wherein the two ends of the protective body 11 are fixedly connected to the adjusting body 12 mounted to both sides of the automobile seat 2 (in the width direction of the automobile seat) respectively, wherein the adjusting body 12 is fixedly connected to the automobile seat 2 at one end, and the other end of the adjusting body 12 is detachably connected to the end of the protective body 11 by means of a latch. These two adjusting bodies 12 have an adjustment function. These two adjusting bodies 12 can adjust the magnitude of the restraining force applied to the occupant according to the actual use situation, and wherein at the same time, under the action of the two adjusting bodies 12 independently and coordinately cooperating with each other, it is possible to make the protective body 11 follow the movement of the lower limbs of the occupant in the event of a vehicle collision, and to keep the protective body 11 at a standstill relative to the lower limbs of the occupant at all times.

When a frontal collision occurs in a vehicle, the torso of the occupant can slide downward along the seat backrest due to inertia, and the diving phenomenon is likely to occur under the pull of the lower limb's inertia force, wherein the present invention makes it possible, by means of the above structural form, that in the event of a frontal collision of a vehicle, the lower limb restraining device 1 can restrain the occupant's knee and upper shank, and alleviate the phenomenon of dive and absorb the kinetic energy of the occupant while utilizing the support of the thighs, improve the restraining position of the seat belt on the occupant, thereby reducing the injuries of the occupant. As a result, the problem of the lack of protection for the lower limbs of the occupant by the automobile seat 2 during a collision is effectively solved, which is conducive to reducing the collision injuries to the main organs of the human body, such as the head, neck, chest, spine, and internal organs, and improves the driving or riding comfort and safety. At the same time, the two adjusting bodies 12 can coordinate with each other in the collision process to adjust the dynamics of the protective body 11, thereby avoiding relative sliding of the protective body 11 with respect to the lower limbs of the occupant when restraining the lower limbs of the occupant, which is conducive to reducing the abrasions on the patella or knee of the occupant by the protective body 11 when sliding laterally.

As a preferred embodiment, as shown in Figs. 1 and 2, the protective body 11 may comprise a first connecting portion, a protective portion, and a second connecting portion connected in sequence, wherein the first connecting portion and the second connecting portion can be connected to the two adjusting bodies 12, respectively, wherein the protective portion is configured to rest against the lower limb of the occupant.

The protective body 11 comprises a first connecting portion, a protective portion and a second connecting portion connected in sequence, wherein the protective portion is configured to rest against the lower limbs of the occupant. The respective end away from the protective portion on the first connecting portion and on the second connecting portion is snap-connected to the adjusting body 12 on both sides of the automobile seat 2, so that the protective body 11 surrounds and encompasses the lower limb of the occupant, while the protective portion is only secured by the first connecting portion and the second connecting portion and does not come into contact with the automobile seat 2. In the event of a vehicle collision, the first connecting portion and the second connecting portion on both sides of the protective portion can independently adjust the protective portion, and at the same time the protective portion does not come into contact with the automobile seat 2, i.e., is not restricted by the automobile seat 2, which is conducive to making the posture adjustment of the protective portion more flexible, conducive to avoiding relative sliding of the protective body with respect to the lower limbs of the occupant when restraining the lower limbs of the occupant, and conducive to reducing the abrasions on the patella or knee of the occupant by the protective portion when sliding laterally.

As a preferred embodiment, as shown in Figs. 1 and 2, the adjusting body 12 may comprise a telescopic mechanism 121 capable of changing the amount of elongation, wherein one end of the telescopic mechanism 121 is fixedly connected to the automobile seat 2, and an extended end of the telescopic mechanism 121 is connected to the protective body 11.

The adjusting body 12 may comprise a telescopic mechanism 121, wherein one end of the telescopic mechanism 121 is fixedly connected to the automobile seat 2, and a telescopic end at the other end of the telescopic mechanism 121 is detachably connected to the protective body 11 by means of a latch, wherein the telescopic mechanism 121 adjusts the magnitude of the restraining force exerted by the protective body 11 on the occupant by varying the amount of its telescoping. In a normal state, the telescopic mechanism 121 can change the amount of telescoping of the telescopic end so that the lower limb restraint device 1 can meet the needs of occupants of different sizes. In a vehicle collision state, the telescopic end of the telescopic mechanism 121 stops extending to restrain the lower limb of the occupant. By restraining the lower limbs/knees, the thighs can be subjected to more constraints, which can reduce injuries to other important parts of the body, such as the abdomen and the spine, improve the driving or riding safety, and reduce the occurrence of diving phenomenon of the occupant, thus reducing injuries to the occupant.

As a preferred embodiment, as shown in Figs. 1 and 2, the telescopic mechanism 121 may comprise a retracting and releasing portion 1211 and an adjusting belt 1212, wherein the retracting and releasing portion 1211 is fixedly mounted to the automobile seat 2, wherein one end of the adjusting belt 1212 is wrapped within the retracting and releasing portion 1211, and the other end of the adjusting belt 1212 extends out of the retracting and is connected to the protective body 11, wherein the magnitude of restraint exerted on the occupant by the protective body 11 can be adjusted by changing the elongation amount of the adjusting belt 1212. In other embodiments, the telescopic mechanism 121 can be configured as an elastic member, wherein a fixed end and a grooved end are provided at two ends of the elastic member respectively, wherein the fixed end is configured to be fixedly connected to the automobile seat 2, and wherein the grooved end is configured to be snap-connected to the protective body 11.

In one embodiment, the telescopic mechanism 121 adopts a retracting and releasing portion 1211 and an adjusting belt 1212, wherein the retracting and releasing portion 1211 is fixedly connected to the automobile seat 2, wherein one end of the adjusting belt 1212 is wrapped within the retracting and releasing portion 1211, and the other end of the adjusting belt 1212 is a protruding end, wherein the protruding end is detachably connected to the protective body 11 by means of a latch, wherein for the adjusting belt 1212, seat belt can be selected, wherein the retracting and releasing portion 1211 changes the magnitude of the restraining force exerted by the protective body 11 on the occupant caused by the telescopic mechanism 121 by changing the elongation amount of the protruding end of the adjusting belt 1212. In other embodiments, the telescopic mechanism 121 adopts an elastic member, wherein one end of the elastic member is fixedly connected to the automobile seat 2, and the other end of the elastic member is detachably connected to the protective body 11 by means of a latch. Under force, the elastic member adjusts the magnitude of the restraining force exerted by the protective body 11 on the occupant by means of elastic deformation. Such a form of mechanism is simple and efficient, and enables the adjusting body 12 to have a constraining adjustment function that meets the needs of actual use.

As a preferred embodiment, as shown in Figs. 1 and 2, the adjusting body 12 may further comprise a pre-tensioning mechanism, wherein the pre-tensioning mechanism is provided within the retracting and releasing portion 1211 and acts on the adjusting belt 1212 to provide pre-tensioning force between the protective body 11 and the lower limb of the occupant. The adjusting body 12 further comprises a locking mechanism, wherein the locking mechanism is provided within the retracting and releasing portion 1211 and acts on the adjusting belt 1212 to stop the elongation of the adjusting belt 1212. The adjusting body 12 may further comprise a force-limiting mechanism, wherein the force-limiting mechanism is provided within the retracting and releasing portion 1211 and acts on the adjusting belt 1212. When a value of the acting force applied to the adjusting belt 1212 is greater than a set value of the force-limiting mechanism, the force-limiting mechanism deforms or moves in such a way as to keep the magnitude of the restraining force exerted by the protective body 11 on the occupant at the set restraining force value.

A pre-tensioning mechanism, a locking mechanism, and a force-limiting mechanism can be mounted in the retracting and releasing portion 1211. When the occupant rests the protective body 11 against the lower limb, the pre-tensioning mechanism acts on the adjusting belt 1212 to provide a pre-tensioning force between the protective body 11 and the lower limb of the occupant, which pre-tensioning force causes the protective body 11 to rest tightly against the lower limb of the occupant and forms a certain constraint on the knee of the occupant before the vehicle collision. When the vehicle is involved in a frontal collision, the locking mechanism acts on the adjusting belt 1212, wherein the adjusting belt 1212 is pulled out quickly in an emergency situation, at which time the locking mechanism locks the adjusting belt 1212 so that the protective body 11 restrains the occupant's knee and upper shank. A force-limiting mechanism is also provided within the retracting and releasing portion 1211. When the force exerted by the protective body 11 on the lower limb of the occupant suddenly increases and exceeds a set value during an automobile collision, the force-limiting mechanism is triggered, and the force-limiting mechanism undergoes plastic deformation of the material or performs a belt-resist motion to absorb energy, thereby stabilizing the lower limb of the occupant and continuously generating the set restraining force. While the force-limiting mechanism absorbs the kinetic energy of the collision of the occupant's lower limb, the force-limiting mechanisms located in the adjusting body 12 on each side of the occupant will work separately to ensure that they do not cause a thigh fracture or patella contusion to the occupant due to excessive restraining force. The design of the pre-tensioning mechanism, the locking mechanism and the force-limiting structure not only enables the protective body to form constraints on the lower limbs of the occupant during the collision of the vehicle, but also enables the magnitude of the restraining force exerted on the occupant to be adjusted promptly, thereby preventing the magnitude of the restraining force exerted from exceeding the tolerance value of the human body, so as to form a protection for the lower limbs of the occupant.

As a preferred embodiment, as shown in Figs. 1 and 2, the adjusting body 12 may further comprise a first connecting body 122, wherein the end of the protective body 11 have a second connecting body 111, wherein one end of the first connecting body 122 is fixedly connected to the adjusting belt 1212, and the other end of the first connecting body 122 is connected to the second connecting body 111.

The first connecting body 122 is sewn at a protruding end of the adjusting belt 1212 on the adjusting body 12, wherein the first connecting body 122 is a locking body. The second connecting body 111 is sewn at the end of both ends of the protective body 11, wherein the second connecting body 111 is a locking tab. The locking body and the locking tab can interact with each other in a similar principle of action as a seat belt latch. After the occupant rests the protective body 11 against the lower limb, the second connecting body 111 on the protective body 11 can be snap-connected within the first connecting body 122. In other embodiments, one end of the protective body 11 can be snap-connected to a locking body attached on the adjusting belt 1212 via a sewn locking tab, while the other end of the protective body 11 is sewn directly to the end of the adjusting strap 1212. By making the adjusting body 12 and the protective body 11 connected in the form of the first connecting body 122 and the second connecting body 111, convenience can be brought to the occupant when wearing the lower limb restraint device 1, thereby facilitating the realization of a quick connection between the adjusting body 12 and the protective body 11.

As a preferred embodiment, as shown in Figs. 1 and 2, the protective body 11 covers the knee and upper shank of the occupant on the side facing the occupant to restrain the lower limb of the occupant.

After the occupant wears the lower limb restraint device, the lower limb restraint device 1 can cover the knee and upper shank of the occupant, while the knee and shank of the occupant can move freely within a certain range. In the event of a vehicle collision, the lower limb restraint device 1 in this position can allow the thighs to bear more restraints by restraining the lower limbs/knee of the occupant, which can reduce injuries to other important parts of the body, such as the abdomen, spine, etc., and improve the driving or riding safety.

As a preferred embodiment, as shown in Figs. 1 and 2, the protective body 11 is provided with a liner on a side facing the occupant, wherein the liner is of a flexible material, wherein one side of the liner is fixedly connected to the protective body 11, and the other side of the liner rests against the lower limb of the occupant.

After the occupant wears the lower limb restraint device 1, the protective body 11 can be in contact with the knee and upper shank of the occupant in order to reduce the injuries to the knee, such as the patella, due to knee slippage under stress, wherein the protective body 11 of the lower limb restraint device 1 is provided with a liner at a position in contact with the human knee, wherein the liner is made of a soft material such as a fabric, or a foam material is added inside the fabric, and so on. At the same time the protective body 11 is narrowed at the second connecting body 111 and gradually widened at the knee and shank positions, thereby increasing the force area and reducing the damage to the human body. The protective body 11 can form a three-dimensional shape in imitation of the knee and the upper shank in the contact area of the knee by using its internal foaming or foam material as a liner, so as to improve the comfort of the occupant when in use and to better restrain the knee and the shank, and to reduce the knee slippage.

An embodiment of the present invention provides an automobile seat 2, as shown in Figs. 1 and 2, wherein the automobile seat 2 utilizes the aforesaid lower limb restraint device 1 for the automobile seat 2.

The automobile seat 2 is provided with the lower limb restraint device 1. In the event of a vehicle collision, the lower limb restraint device 1 can restrain the knee and upper shank of the occupant, alleviate the diving phenomenon, and absorb the kinetic energy of the occupant while utilizing the support of the thighs, improve the restraining position of the seat belt on the occupant, thereby reducing the injury of the occupant. As a result, the problem of the lack of protection of the lower limbs of the occupant by the automobile seat 2 during a collision is effectively solved, which is conducive to reducing the collision injuries to the main organs of the human body, such as the head, neck, chest, spine, and internal organs, as well as to improving the driving or riding comfort and safety. At the same time, the lower limb restraint device can also be applied in future autonomous driving or unmanned driving scenarios, wherein protection is formed for the occupant during a collision.

Although the specific embodiments of the present invention have been described above, those skilled in the art will understand that these embodiments are only examples, and the protection scope of the present invention is defined by the claims. Those skilled in the art can make many changes or modifications to these embodiments without departing from the principle and essence of the present invention, and all of these changes and modifications fall into the protection scope of the present invention.

### Term lists:

- 1: lower limb restraint device
- 11: protective body
- 111: second connecting body
- 12: adjusting body
- 121: telescopic mechanism
- 1211: retracting and releasing portion
- 1212: adjusting belt
- 122: first connecting body
- 2: automobile seat

## Claims

1. A lower limb restraint device for an automobile seat, **characterized in that** the lower limb restraint device comprises a protective body and two adjusting bodies, wherein the protective body is configured to rest against the lower limb of the occupant on the side facing the occupant and wherein the two ends of the protective body are correspondingly connected to the automobile seat by the adjusting bodies on the two sides of the automobile seat respectively, so that the protective body restrains the movement of the occupant and can remain relatively stationary with respect to the lower limbs of the occupant, wherein the adjusting bodies are provided on both sides of the automobile seat respectively, wherein the adjusting body is configured to be connected to the protective body with one end of the adjusting body and to be fixedly connected to the automobile seat with the other end of the adjusting body, wherein the adjusting body is used to adjust the magnitude of the restraining force exerted on the occupant by the protective body.

2. The lower limb restraint device for an automobile seat as claimed in claim 1, **characterized in that** the protective body comprises a first connecting portion, a protective portion and a second connecting portion connected in sequence, wherein the first connecting portion and the second connecting portion can be connected to the two adjusting bodies respectively, wherein the protective portion is configured to rest against the lower limb of the occupant.

3. The lower limb restraint device for an automobile seat as claimed in claim 1, **characterized in that** the adjusting body comprises a telescopic mechanism capable of changing the amount of elongation, wherein the telescopic mechanism is configured to be fixedly connected to the automobile seat with one end of the telescopic mechanism and to be connected to the protective body with an extended end of the telescopic mechanism.

4. The lower limb restraint device for an automobile seat as claimed in claim 3, **characterized in that** the telescopic mechanism comprises a retracting and releasing portion and an adjusting belt, wherein the retracting and releasing portion is configured to be fixedly mounted to the automobile seat, wherein the adjusting belt is configured to be wrapped within the retracting and releasing portion with one end of the adjusting belt, and to extend out of the retracting and releasing portion and to be connected to the protective body with the other end of the adjusting belt, wherein the magnitude of the restraining force exerted on the occupant by the protective body can be adjusted by changing the elongation amount of the adjusting belt.

5. The lower limb restraint device for an automobile seat as claimed in claim 4, **characterized in that** the adjusting body further comprises a locking mechanism, wherein the locking mechanism is provided within the retracting and releasing portion and can act on the adjusting belt to stop the elongation of the adjusting belt.

6. The lower limb restraint device for an automobile seat as claimed in claim 4, **characterized in that** the adjusting body further comprises a force-limiting mechanism, wherein the force-limiting mechanism is provided within the retracting and releasing portion and can act on the adjusting belt, wherein the force-limiting mechanism is configured to deform or move when the value of the acting force applied to the adjusting belt is greater than a set value of the force-limiting mechanism, so as to keep the magnitude of the restraining force exerted by the protective body on the occupant at the set restraining force value.

7. The lower limb restraint device for automobile seat as claimed in claim 4, **characterized in that** the adjusting body further comprises a pre-tensioning mechanism, wherein the pre-tensioning mechanism is provided within the retracting and releasing portion and can act on the adjusting belt, so as to provide pre-tensioning force between the protective body and the lower limb of the occupant.

8. The lower limb restraint for automobile seat as claimed in claim 4, **characterized in that** the adjusting body further comprises a first connecting body, wherein the protective body has a second connecting body at an end of the protective body, wherein the first connecting body is configured to be fixedly connected to the adjusting belt with one end of the first connecting body and to be connected to the second connecting body with the other end of the first connecting body.

9. The lower limb restraint for automobile seat as claimed in claim 8, **characterized in that** the first connecting body is configured as a locking body and is sewn to a protruding end of a corresponding adjusting belt, wherein the second connecting body is configured as a locking tab and is sewn to a respective one of the two ends of the protective body.

10. The lower limb restraint device for an automobile seat as claimed in claim 3, **characterized in that** the telescopic mechanism is configured as an elastic member, wherein a fixed end and a grooved end are provided at two ends of the elastic member respectively, wherein the fixed end is configured to be fixedly connected to the automobile seat, wherein the groove end is configured to be snap-connected to the protective body.

11. The lower limb restraint device for an automobile seat as claimed in claim 1, **characterized in that** the protective body is configured to cover the knee and upper shank of the occupant on a side facing the occupant, so as to restrain the lower limb of the occupant.

12. The lower limb restraint device for an automobile seat as claimed in claim 1, **characterized in that** the protective body is provided with a liner on the side facing the occupant, wherein the liner is of a flexible material, wherein the liner is configured to be fixedly connected to the protective body with one side of the liner and to rest against the lower limb of the occupant with the other side of the liner.

13. An automobile seat, **characterized in that** the automobile seat comprises a lower limb restraint device for automobile seat as claimed in any one of claims 1-12.

14. The automobile seat as claimed in claim 13, **characterized in that** the inclination of the seat backrest of the automobile seat can be adjusted in corresponding to the following occupant sitting postures:
- Normal sitting posture;
- Working sitting posture;
- Leisure sitting posture.

15. The automobile seat as claimed in claim 14, **characterized in that** the lower limb restraining device is configured to restrain the knee and upper shank of the occupant in the event of a frontal collision of the vehicle in the working sitting posture or in the leisure sitting posture, to alleviate the diving phenomenon and to absorb the kinetic energy of the occupant while utilizing the support of the thighs.
